(19) Europäisches Patentamt / European Patent Office / Office européen des brevets

(11) **EP 4 467 621 A1**

(12) **EUROPEAN PATENT APPLICATION**
published in accordance with Art. 153(4) EPC

(43) Date of publication:
**27.11.2024 Bulletin 2024/48**

(21) Application number: **22959008.8**

(22) Date of filing: **20.09.2022**

(51) International Patent Classification (IPC):
*C09J 7/00* (2018.01)    *C09J 7/30* (2018.01)
*C09J 123/00* (2006.01)    *C09J 151/06* (2006.01)
*H01L 31/048* (2014.01)

(52) Cooperative Patent Classification (CPC):
**C09J 7/00; C09J 7/30; C09J 123/00; C09J 151/06; H01L 31/048**

(86) International application number:
**PCT/CN2022/119799**

(87) International publication number:
**WO 2024/059996 (28.03.2024 Gazette 2024/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Central, Central And Western District (HK)**

(72) Inventors:
• **CHEN, Yu**
**Ningde, Fujian 352100 (CN)**

• **YU, Jingjing**
**Ningde, Fujian 352100 (CN)**
• **AI, Shaohua**
**Ningde, Fujian 352100 (CN)**
• **SUN, Chengdong**
**Ningde, Fujian 352100 (CN)**
• **ZHANG, Yuxi**
**Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **COMPOSITE FILM AND PREPARATION METHOD THEREFOR, BATTERY MODULE, BATTERY PACK, AND ELECTRIC DEVICE**

(57)    Embodiments of the present application provides a composite film and a method for the preparation thereof, a battery module, a battery pack, and an electrical device. The method of preparing a composite film includes activating a surface of a polymer film by grafting the polymer film with a polar group on the surface, wherein the polymer film is selected from a polyolefin film or a polyethylene-vinyl acetate film; applying a slurry comprising a modified polymer resin grafted with a polar group to the activated surface of the polymer film to form a slurry coat, wherein the modified polymer resin is selected from a modified polyolefin resin grafted with a polar group or a modified polyethylene-vinyl acetate grafted with a polar group; and heating the slurry coat and the polymer film to transform the slurry coat into a modified polymer resin solid film, thereby obtaining the composite film.

Activating a surface of a polymer film by grafting the polymer film with a polar group on the surface — S1

Applying a slurry comprising a modified polymer resin grafted with a polar group to the activated surface of the polymer film to form a slurry coat — S2

Heating the slurry coat and the polymer film to transform the slurry coat into a modified polymer resin solid film, thereby obtaining the composite film — S3

Fig. 1

## Description

### TECHNICAL FIELD

The present application relates to the field of battery technology, in particular to a composite film and a method for the preparation thereof, a battery module, a battery pack, and an electrical device.

### BACKGROUND

In recent years, secondary batteries represented by lithium-ion batteries and sodium-ion batteries have been more and more widely used, including in energy storage power systems such as hydroelectric, thermal, wind, and solar power stations, as well as in a variety of fields such as power tools, electric bicycles, electric motorcycles, electric vehicles, military equipment, and aerospace. With the development of lithium-ion battery and sodium-ion battery technology, higher requirements have been imposed on the safety performance of both, among others.

In order to improve the safety performance of the secondary battery, the secondary battery is generally wrapped with a protective film on the surface thereof, but the existing protective film has a low bond strength to the secondary battery, which leads to reduction in the safety performance of the secondary battery. Therefore, the safety performance of the existing secondary battery still needs to be improved.

### SUMMARY

In view of the above, the present application provides a composite film and a method for the preparation thereof, a battery module, a battery pack, and an electrical device, to address the problem with the relatively low safety of secondary batteries.

In order to accomplish the above, embodiments of the present application provide a method of preparing a composite film comprising:

activating a surface of a polymer film by grafting the polymer film with a polar group on the surface, wherein the polymer film is selected from a polyolefin film or a polyethylene-vinyl acetate film;

applying a slurry comprising a modified polymer resin grafted with a polar group to the activated surface of the polymer film to form a slurry coat, wherein the modified polymer resin is selected from a modified polyolefin resin grafted with a polar group or a modified polyethylene-vinyl acetate grafted with a polar group; and

heating the slurry coat and the polymer film to transform the slurry coat into a modified polymer resin solid film, thereby obtaining the composite film.

The method of preparing a composite film according to embodiments of the present application obtains a composite film having a modified polymer resin solid film and a polymer film by applying a slurry comprising a modified polymer resin grafted with a polar group to the activated surface of the polymer film, followed by heating. Without intending to be limited by any theory or explanation, by applying the slurry to the activated surface of the polymer film, surface modification occurs after the surface of the polymer film is activated so that the polymer film has a stronger bonding force to the resulting modified polymer resin solid film. Moreover, since the polar group is grafted on the surface of the polymer film and the polar group is incorporated into the slurry coat, the polymer film and the slurry coat are mutually diffused with each other during heating so that a gradual interface between the polymer film and the modified polymer resin solid film is formed, which not only reduces the interfacial energy between the modified polymer resin solid film and the polymer film, but also improves the compounding strength between the two films. In the composite film prepared in this application, the polymer film has a higher mechanical strength and insulating performance, the modified polymer resin solid film has a higher bonding strength, the polymer film and the modified polymer resin solid film that are compounded to form a composite film can better exert their respective advantages and make up for their respective shortcomings, producing a synergistic effect. The composite film as a whole has a higher mechanical strength and insulating performance compared to a single protective film as well as has better fitting and bonding strength.

In some embodiments of the present application, the activating a surface of a polymer film comprises:

providing an activation solution that comprises a first graft-modifying monomer having a polar group dissolved in an organic solvent and a free radical initiator; and
initiating the free radical initiator in the presence of contacting the surface of the polymer film with the activation solution so as to enable the graft-modifying monomer to be grafted to the surface of the polymer film.

In these optional embodiments, the first graft-modifying monomer is grafted onto the surface of the polymer film by initiating the free radical initiator to activate the surface of the polymer film, which activation method is simple and easy to operate, and the prepared polymer film has uniformly dispersed grafted polar groups on the surface thereof, which enables compounding of the polymer film with the modified polymer resin solid film to be stable.

In some embodiments of the present application, the first graft-modifying monomer comprises unsaturated carboxylic anhydride or (meth)acrylate, and optionally comprises maleic anhydride.

In these optional embodiments, the graft-modifying monomer described above is readily soluble in an organic solvent and readily initiated by an initiator for grafting onto polymer films.

In some embodiments of the present application, the free radical initiator is one or more selected from dicumyl peroxide, benzoyl peroxide, tert-butyl laurate peroxide, tert-butyl benzoate peroxide, and tert-butyl acetate peroxide.

In these optional embodiments, the above-described free radical initiator is readily soluble in an organic solvent and the above-described free radical initiator is readily decomposed into a free radical by heat, which makes it easy for a graft polymerization reaction to occur.

In some embodiments of the present application, the organic solvent is one or more selected from N-methylpyrrolidone, xylene, decahydronaphthalene, turpentine or mineral oil.

In these optional embodiments, the organic solvent mentioned above is capable of sufficiently solubilizing a free radical initiator and a graft-modifying monomer, and is easy to be removed by volatilization after heating.

In some embodiments of the present application, the first graft-modifying monomer is present in the activation solution in a mass percentage of 0.5% to 1%, optionally 0.7% to 0.8%.

In these optional embodiments, the first graft-modifying monomer is present in the activation solution in a certain mass, so that it is able to be sufficiently dispersed in the organic solvent and grafted to the surface of the polymer film, and waste due to excess first graft-modifying monomer not grafted to the surface of the polymer film is also reduced.

In some embodiments of the present application, the free radical initiator is present in the activation solution in a mass percentage of 0.1% to 0.5%, optionally 0.1% to 0.3%.

In these optional embodiments, the free radical initiator is present in a certain mass, which is coupled with the first graft-modifying monomer, and is triggered to allow the first graft-modifying monomer to be fully grafted to the surface of the polymer film.

In some embodiments of the present application, the initiating the free radical initiator to cause the first graft-modifying monomer to be grafted to the surface of the polymer film is carried out by heating the activation solution at a temperature of 120 to 150°C for 1h to 3h.

In these optional embodiments, the free radical initiator is initiated by heating to cause the first graft-modifying monomer to be grafted onto the surface of the polymer film, and the grafting manner described above is simple and controllable.

In some embodiments of the present application, the polyolefin film is selected from a polypropylene film or a polyethylene film.

In these optional embodiments, these specific optional polyolefin films described above enable the polymer film to have better insulating performance and mechanical performance, and the specific optional polyolefin films described above are easier to manufacture.

In some embodiments of the present application, the slurry has a mass concentration of 5% to 15%, optionally 8% to 12%.

In these optional embodiments, a suitable mass concentration of the slurry makes the slurry paintable and ensures the thickness of subsequently formed modified polymer resin solid film.

In some embodiments of the present application, the modified polyolefin resin is selected from modified polypropylene grafted with acid anhydride groups or modified polyethylene grafted with acid anhydride groups, optionally from modified polypropylene grafted with maleic anhydride groups or modified polyethylene grafted with maleic anhydride groups.

In some embodiments of the present application, the modified polyethylene-vinyl acetate is a modified polyethylene-vinyl acetate grafted with an anhydride group, and optionally, a modified polyethylene-vinyl acetate grafted with a maleic anhydride group.

In these optional embodiments, these specific optional modified polymer resins described above are homologous to the resin forming the polymer film so that the compounding strength between the polymer film and the modified polymer resin solid film can be further improved.

In embodiments of the present application, the heating the slurry coat and the polymer film is carried out at a heating temperature of from 50° C to 150° C for 10h to 48h, optionally from 80° C to 120° C for 20h to 30h.

In these optional embodiments, the heating can remove solvent in the slurry coat to form a modified polymer resin solid film, and, since the polar group is grafted on the surface of the polymer film and the polar group is incorporated into the slurry coat, the polymer film and the slurry coat are mutually diffused with each other during heating so that a gradual interface between the polymer film and the modified polymer resin solid film is formed, which improves the compounding strength between the modified polymer resin solid film and the polymer film. In addition, the heating temperature described above can effectively reduce degradation of the polymer film.

In some embodiments of the present application, the method further comprises preparing the modified polymer resin, comprising:

dissolving a polymer resin, a second graft-modifying monomer having a polar group, and a free radical initiator in an organic solvent to obtain a mixed solution;

initiating the free radical initiator in the mixed solution to cause a grafting reaction between the second graft-modifying monomer and the polymer resin;

recycling a product from the mixed solution to obtain the modified polymer resin.

In these optional embodiments, the graft modification is carried out by a solution method, which has a lower reaction temperature, fewer side reactions, is easy to manipulate, and has a low degree of degradation of the polymer resin.

In some embodiments of the present application, a mass ratio of the polymer resin, the second graft-modifying monomer and the free radical initiator in the mixed solution is in the range of 100:(1-5):(0.5-1).

In these optional embodiments, the above-described polymer resin, the second graft-modifying monomer and the free radical initiator have a suitable mass ratio such that the second graft-modifying monomer is sufficiently grafted to the surface of the polymer resin.

In some embodiments of the present application, initiating the free radical initiator in the mixed solution to cause a grafting reaction between the second graft-modifying monomer and the polymer resin is carried out by heating the mixed solution at a temperature of 100 to 140°C for 2h to 5h.

In these optional embodiments, the grafting reaction has a lower temperature, effectively reducing degradation degree of the polymer resin.

In some embodiments of the present application, the second graft-modifying monomer comprises unsaturated carboxylic anhydride or (meth)acrylate, and optionally, maleic anhydride.

Embodiments of the present application further provide a composite film that can be prepared and obtained by the methods described above.

The composite film provided in the present application has both a higher mechanical strength and insulating performance, and a higher bonding strength, the polymer film and the modified polymer resin solid film that are compounded to form the composite film can better exert their respective advantages and make up for their respective shortcomings, producing a synergistic effect.

In some embodiments of the present application, the polymer film is a polyethylene film, and a modified polymer resin of the modified polymer resin solid film is a modified polyethylene grafted with anhydride groups, optionally, a modified polyethylene grafted with maleic anhydride groups.

In some embodiments of the present application, the polymer film is a polypropylene film, and a modified polymer resin of the modified polymer resin solid film is a modified polypropylene grafted with anhydride groups, optionally, a modified polypropylene grafted with maleic anhydride groups.

In some embodiments of the present application, the polymer film is a polyethylene vinyl acetate film, and a modified polymer resin of the modified polymer resin solid film is a modified polyethylene vinyl acetate grafted with anhydride groups, optionally, a modified polyethylene vinyl acetate grafted with maleic anhydride groups.

In these optional embodiments, the polymer film described above is compounded with the modified polymer resin solid film homologous to it, thereby obtaining a higher compounding strength.

In some embodiments of the present application, the modified polymer resin solid film has a thickness of from 10 $\mu$m to 50 $\mu$m, optionally from 10 $\mu$m to 30 $\mu$m.

In these optional embodiments, the modified polymer resin solid film has a thickness of from 10 $\mu$m to 50 $\mu$m, and the above suitable thickness enables the modified polymer resin solid film to be stably bonded to the polymer film, and the bonding strength of the resulting composite film can be guaranteed when the composite film is applied to the battery module. In the case where the thickness of the modified polymer resin solid film is less than 10 $\mu$m, the finished composite film has a poor bonding strength, and when the composite film is applied to the battery module, it is not possible to ensure that the composite film is stably bonded to the secondary battery, and in the case where the thickness of the modified polymer resin solid film is more than 50 $\mu$m, the resulting composite film has a reduced mechanical strength since the modified polymer resin solid film has a low mechanical strength.

In some embodiments of the present application, the polymer film has a thickness of 50 $\mu$m to 130 $\mu$m, optionally 50 $\mu$m to 90 $\mu$m.

In these optional embodiments, the polymer film has a thickness of 50 $\mu$m to 130 $\mu$m, and the above suitable thickness allows the polymer film to have a certain mechanical strength and insulating performance. In the case where the thickness of the polymer film is less than 50 μm, the molding and insulating performance of the finished composite film are relatively poor, and in the case where the thickness of the polymer film is more than 130 μm, the composite film has a too thick total thickness, and its softness will deteriorate.

Embodiments of the present application further provide a composite film comprising a polymer film and a modified polymer resin solid film bonded to the surface of the polymer film, the modified polymer resin solid film having a thickness of 10 μm to 50 μm, and the polymer film having a thickness of 50 μm to 130 μm, wherein the polymer film is selected from a polyolefin film or a polyethylene vinyl acetate film, the modified polymer resin solid film is made of a modified polymer resin selected from a modified polyolefin resin grafted with a polar group or a modified polyethylene-vinyl acetate grafted with a polar group.

The composite film provided by the embodiments of the present application includes a polymer film and a modified polymer resin solid film, the polymer film has a higher mechanical strength and insulating performance, the modified polymer resin solid film has a higher bonding strength, the polymer film and the modified polymer resin solid film that are compounded to form a composite film can better exert their respective advantages and make up for their respective shortcomings, producing a synergistic effect; and the composite film as a whole has a higher structural stability and has better fitting and bonding strength compared to a single protective film.

Embodiments of the present application further provide a battery module comprising a secondary battery and a composite film, the composite film being wrapped around at least a portion of the secondary battery, and a modified polymer resin solid film in the composite film being adhered to the secondary battery, wherein the composite film is a composite film obtained by the above-described method or the above-described composite film.

In the battery module according to embodiments of the present application, the composite film is directly adhered to the secondary battery by adhesion of the modified polymer resin solid film, without a thermal adhesive for bonding, and the composite film has a high bonding strength to the secondary battery, which effectively reduces the phenomenon of peeling off of the composite film from the secondary battery.

Embodiments of the present application further provide a method of preparing a battery module, comprising obtaining the battery module by wrapping a composite film around a surface of a secondary battery by means of hot pressing, wherein a modified polymer resin solid film in the composite film is adhered to the secondary battery.

According to the method of preparing a battery module of embodiments of the present application, the composite film is wrapped around the surface of the secondary battery by means of hot pressing. The method is simple and has an improved production efficiency, and the hot pressing can tightly fit the composite film on the surface of the secondary battery, ensuring that the composite film is tightly wrapped around the secondary battery. In addition, the composite film of the present application has a small bonding strength at room temperature, which facilitates installation and application of the film, and the composite film has an increased bonding strength that is higher than that of the conventional thermal adhesive when it is subjected to hot pressing, and thus it is capable of stably covering the surface of the secondary battery.

In some embodiments of the present application, the hot pressing is carried out at a temperature of from 90°C to 180°C, optionally 100°C to 150°C.

In these optional embodiments, the temperature for hot pressing is determined based on the modified polymer resin solid film, and the determined temperature can both ensure the bonding strength of the modified polymer resin solid film and reduce the degradation of the polymer film.

In some embodiments of the present application, the hot pressing is carried out at a pressure of from 0.1 MPa to 5 MPa, optionally 0.5 MPa to 5 MPa.

In these optional embodiments, the pressure for hot pressing is matched with the temperature for hot pressing, so that the composite film is tightly bonded to the surface of the secondary battery, and the composite film is ensured to have a certain thickness, so that it has a high mechanical strength.

In some embodiments of the present application, the hot pressing is carried out for 1s to 10s, optionally 3s to 5s.

In these optional embodiments, a suitable hot pressing period ensures that the composite film has a certain thickness, which results in the composite film having a high mechanical strength.

In some embodiments of the present application, before the composite film is compounded to the surface of the secondary battery, the method further comprises sandblasting the surface of the secondary battery first, and then acidizing the surface.

In these optional embodiments, the activation treatment, i.e., the sandblasting treatment and the acidizing treatment, of the surface of the secondary battery can remove impurities and an oxide film on the surface of the secondary battery, improve cleanliness of the surface of the secondary battery, as well as make the surface of the secondary battery have a certain degree of roughness, so as to make mechanical properties of the surface of the secondary battery improved, thereby increasing adhesion between the surface of the secondary battery and the composite film and prolonging durability of the composite film.

The present application provides a battery pack, comprising the above described battery module or the battery module obtained by the above described method.

The present application provides an electrical device, comprising the above described battery module and the battery module obtained by the above described method or the above described.

## DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 illustrates a flowchart of a method of preparing a composite film according to an embodiment of the present application.

Fig. 2 illustrates a flowchart of an exemplary process of activating a surface of a polymer film in a method of preparing a composite film.

Fig. 3 illustrates a flowchart of an exemplary process for forming a modified polymer resin in a method for preparing a composite film.

Fig. 4 is a schematic diagram of a secondary battery according to an embodiment of the present application.

Fig. 5 is an exploded schematic diagram of a secondary battery according to an embodiment of the present application shown in Fig. 4.

Fig. 6 is a schematic diagram of a battery module according to an embodiment of the present application.

Fig. 7 is a schematic diagram of a battery pack according to an embodiment of the present application.

Fig. 8 is an exploded schematic diagram of a battery pack according to an embodiment of the present application shown in Fig. 7.

Fig. 9 is a schematic diagram of an electrical device including the secondary battery according to an embodiment of the present application as a power source.

Reference numerals are as follows:
1. Battery pack; 2. Upper box body; 3. Lower box body; 4. Battery module; 5. Secondary battery; 51. Housing; 52. Electrode assembly; and 53. Cover plate.

## DETAILED DESCRIPTION

Hereinafter, embodiments of the composite film and method for the preparation thereof, the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.
The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution.

Unless stated otherwise, all the technical features and the optional technical features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

With the great development of both lithium-ion batteries and sodium-ion batteries, higher requirements have been put forward for their energy density, cycle performance and safety performance. The surface of the secondary batteries is generally wrapped with a protective film that has an insulating performance, and the protective film is bonded to the secondary battery by means of adhesive coating. Nevertheless, the inventors found that the adhesive coating makes the protective film and the secondary battery have a low connection strength, and uneven adhesive coating further leads to inconsistency in the bonding strength of the protective film, which reduces the protective performance of the protective film, and is prone to the risk of short circuit.

Based on above technical problem found by the inventors of the present application, the present application provides a composition film, comprising a polymer film and a modified polymer resin solid film, the polymer film has a higher mechanical strength and insulating performance, the modified polymer resin solid film has a higher bonding strength, the polymer film and the modified polymer resin solid film that are compounded to form a composite film can better exert their respective advantages and make up for their respective shortcomings, producing a synergistic effect; and the composite film as a whole has a higher structural stability as well as has better fitting and bonding strength compared to a single protective film.

Method of preparing a composite film

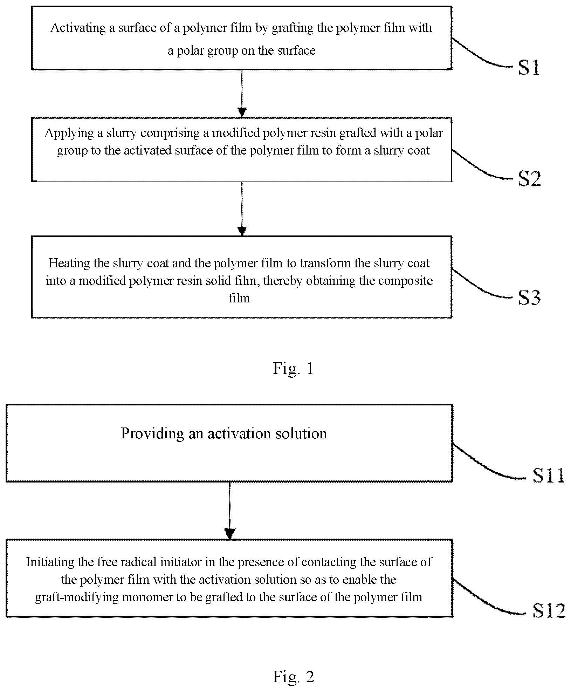

Fig. 1 illustrates a flowchart of a method of preparing a composite film according to an embodiment of the present application.

As shown in Fig. 1, the method of preparing a composite film comprises:

S 1, activating a surface of a polymer film by grafting the surface of the polymer film with a polar group,

wherein the polymer film is selected from a polyolefin film or a polyethylene-vinyl acetate film;

S2, applying a slurry comprising a modified polymer resin grafted with a polar group to the activated surface of the polymer film to form a slurry coat,

wherein the modified polymer resin is selected from a modified polyolefin resin grafted with a polar group or a modified polyethylene-vinyl acetate grafted with a polar group; and

S3, heating the slurry coat and the polymer film to transform the slurry coat into a modified polymer resin solid film, thereby obtaining the composite film.

The method of preparing a composite film according to embodiments of the present application obtains a composite film having a modified polymer resin solid film and a polymer film by applying a slurry comprising a modified polymer resin grafted with a polar group to the activated surface of the polymer film, followed by heating. Without intending to be limited by any theory or explanation, by applying the slurry comprising a modified polymer resin grafted with a polar group to the activated surface of the polymer film, surface modification occurs after the surface of the polymer film is activated so that the polymer film has a stronger bonding force to the resulting modified polymer resin solid film. Moreover, since the polar group is grafted on the surface of the polymer film and the polar group is incorporated into the slurry coat, the polymer film and the slurry coat are mutually diffused with each other during heating so that a gradual interface between the polymer film and the modified polymer resin solid film is formed, which not only reduces the interfacial energy between the modified polymer resin solid film and the polymer film, but also improves the compounding strength between the two films. In the composite film prepared in this application, the polymer film has a higher mechanical strength and insulating performance, the modified polymer resin solid film has a higher bonding strength, the polymer film and the modified polymer resin solid film that are compounded to form a composite film can better exert their respective advantages and make up for their respective shortcomings, producing a synergistic effect. The composite film as a whole has a higher mechanical strength and insulating performance compared to a single protective film as well as has better fitting and bonding strength.

According to embodiments of the present application, in step S1, by grafting the surface of the polymer film selected from a polyolefin film or a polyethylene-vinyl acetate film with a polar group, it is possible to increase polarity of the surface of the polymer film, thereby functionalizing the surface of the polymer film and increasing activity of the surface of the polymer film.

As an example, the grafted polar group is derived from an unsaturated carboxylic anhydride, or an unsaturated carboxylic ester.

In an embodiment of the present application, the polyolefin film is a film formed with a polyolefin resin as a film-forming matrix. In the context of the present application, the polyolefin resin refers to a homopolymer or copolymer formed by the polymerization of olefin monomers, and includes a blend formed from two or more polyolefins.

In an embodiment of the present application, the polyethylene-vinyl acetate film is a film formed with a polyethylene-vinyl acetate resin as a film-forming matrix. In the context of the present application, the polyethylene-vinyl acetate (EVA) is a copolymer of ethylene and vinyl acetate, wherein vinyl acetate (VA) is present in a mass fraction of less than or equal to 30%, optionally less than or equal to 20%, optionally less than or equal to 15%, optionally less than or equal to 10%.

In some embodiments of the present application, in step S2, the slurry comprising the modified polymer resin grafted with a polar group is coatable and capable of stably adhering to the activated surface of the polymer film after coating.

Optionally, application of the slurry is one selected from gravure, microgravure, screen printing, cylinder printing, electrospray, transfer coating, or extrusion coating.

In some embodiments of the present application, in step S3, the slurry film and the polymer film are heated, wherein, on the one hand, the heating treatment may remove solvents from the slurry film to form a modified polymer resin solid film, and on the other hand, since the polar group is grafted on the surface of the polymer film and the polar group is incorporated into the slurry coat, the polymer film and the slurry coat are mutually diffused with each other during heating so that a gradual interface between the polymer film and the modified polymer resin solid film is formed, which improves the compounding strength between the two films.

Fig. 2 illustrates a flowchart of an exemplary process of activating a surface of a polymer film in a method of preparing a composite film.

In some embodiments, as shown in Fig. 2, step S1 of activating a surface of a polymer film comprises:

step S11 of providing an activation solution that comprises a first graft-modifying monomer having a polar group dissolved in an organic solvent and a free radical initiator; and

step S12 of initiating the free radical initiator in the presence of contacting the surface of the polymer film with the activation solution so as to enable the graft-modifying monomer to be grafted to the surface of the polymer film.

In step S11 of the present application, the organic solvent, the first graft-modifying monomer having a polar group and the free radical initiator are mixed to obtain an activation solution. The first graft-modifying monomer having a polar group and the free radical initiator are sufficiently dispersed in the organic solvent under the condition of sufficient agitation.

In step S12 of the present application, the first graft-modifying monomer is grafted onto the surface of the polymer film by initiating the graft polymerization reaction of the free radical initiator to modify the surface of the polymer film so as to improve the subsequent bonding strength with the modified polymer resin solid film.

Optionally, means of initiating the free radical initiator comprises initiating by chemistry or radiation.

More optionally, means of initiating the free radical initiator comprises initiating by heating.

In these optional embodiments, the first graft-modifying monomer is grafted onto the surface of the polymer film by initiating the free radical initiator to activate the surface of the polymer film, which activation method is simple and easy to operate, and the prepared polymer film has uniformly dispersed grafted polar groups on the surface thereof, which enables compounding of the polymer film with the modified polymer resin solid film to be stable.

In some embodiments, the first graft-modifying monomer comprises unsaturated carboxylic anhydride or (meth)acrylate, and optionally, the first graft-modifying monomer comprises maleic anhydride.

In these optional embodiments, the first graft-modifying monomers described above are readily soluble in an organic solvent and readily initiated by an initiator for grafting onto polymer films.

In some embodiments, the free radical initiator is one or more selected from dicumyl peroxide, benzoyl peroxide, tert-butyl laurate peroxide, tert-butyl benzoate peroxide, and tert-butyl acetate peroxide.

In these optional embodiments, the above-described free radical initiator is readily soluble in an organic solvent and the above-described free radical initiator is readily decomposed into a free radical by heat, which makes it easy for a graft polymerization reaction to occur.

In some embodiments, the organic solvent is one or more selected from N-methylpyrrolidone, xylene, decahydronaphthalene, turpentine or mineral oil.

In these optional embodiments, the organic solvent mentioned above is capable of sufficiently dissolving the free radical initiator and the first graft-modifying monomer, and is easy to be removed by volatilization after heating.

In some embodiments, the first graft-modifying monomer is present in the activation solution in a mass percentage of 0.5% to 1%.

In some embodiments, the mass percentage of the first graft-modifying monomer in the activation solution is 0.5%, 0.6%, 0.7%, 0.8%, 0.9%, 1% or within a range comprising any two of the above endpoints.

Optionally, the first graft-modifying monomer is present in the activation solution in a mass percentage of 0.7% to 0.8%.

In these optional embodiments, the first graft-modifying monomer is present in the activation solution in a certain mass, so that it is able to be sufficiently dispersed in the organic solvent and grafted to the surface of the polymer film, and waste due to excess first graft-modifying monomer not grafted to the surface of the polymer film is also reduced.

In some embodiments, the free radical initiator is present in the activation solution in a mass percentage of 0.1% to 0.5%.

In some embodiments, the mass percentage of the free radical initiator in the activation solution is 0.1%, 0.2%, 0.3%, 0.4%, 0.5% or within a range comprising any two of the above endpoints.

Optionally, the free radical initiator is present in the activation solution in a mass percentage of 0.1% to 0.3%.

In these optional embodiments, the free radical initiator is present in a certain mass, which is coupled with the first graft-modifying monomer, and is triggered to allow the first graft-modifying monomer to be fully grafted to the surface of the polymer film.

In some embodiments, initiating the free radical initiator to cause the first graft-modifying monomer to be grafted to the surface of the polymer film is carried out by heating the activation solution at a temperature of 120 to 150°C for 1h to 3h.

In some embodiments, initiating the free radical initiator to cause the first graft-modifying monomer to be grafted to the surface of the polymer film is carried out by heating the activation solution at a temperature of 120° C, 121° C, 122° C, 123° C, 124° C, 125° C, 126° C, 127° C, 128° C, 129° C, 130° C, 131° C, 132° C, 133° C, 134° C, 135° C, 136° C, 137° C, 138° C, 139° C, 140° C, 141° C, 142° C, 143° C, 144° C, 145° C, 146° C, 147° C, 148° C, 149° C, 150° C, or in other ranges comprised by any two of the above mentioned endpoints.

In some embodiments, initiating the free radical initiator to cause the first graft-modifying monomer to be grafted to the surface of the polymer film is carried out by heating the activation solution for 1h, 1.1h, 1.2h, 1.3h, 1.4h, 1.5h, 1.6h, 1.7h, 1.8h, 1.9h, 2h, 2.1h, 2.2h, 2.3h, 2.4h, 2.5h, 2.6h, 2.7h, 2.8h, 2.9h, 3h, or in other ranges consisting of any two of the above endpoints.

In these optional embodiments, the free radical initiator is initiated by heating to cause the first graft-modifying monomer to be grafted onto the surface of the polymer film, and the grafting manner described above is simple and controllable.

In some embodiments, the polyolefin film is selected from a polypropylene film or a polyethylene film.

In an embodiment of the present application, the polypropylene film is a film formed from a polypropylene resin as a film-forming matrix. In the context of this application, the polypropylene resin includes a homopolymer of propylene and a copolymer of propylene with a small amount of olefinic co-monomer. In the context of the present application, the polyethylene film is a film formed from a polyethylene resin as a film-forming matrix. In the context of the present application, the polyethylene resin includes a homopolymer of ethylene and a copolymer of ethylene with a small amount of olefinic co-monomer. Examples of polyethylene resins include, but are not limited to, high-density polyethylene (HDPE), low-density polyethylene (LDPE), linear low-density polyethylene (LLDPE), and polyolefin elastomers (POE).

In these optional embodiments, these specific optional polyolefin films described above enable the polymer film to have better insulating performance and mechanical performance, and the specific optional polyolefin films described above are easier to manufacture.

In some embodiments, the slurry has a mass concentration of 5% to 15%.

In some embodiments of the present application, the slurry has a mass concentration of 5%, 6%, 7%, 8%, 9%, 10%, 11%, 12%, 13%, 14%, 15%, or in other ranges consisting of any two of the above endpoints.

Optionally, the slurry has a mass concentration of 8% to 13%.

In these optional embodiments, a suitable mass concentration of the slurry makes the slurry paintable and ensures the thickness of subsequently formed modified polymer resin solid film.

In some embodiments, the modified polyolefin resin is selected from modified polypropylene grafted with acid anhydride groups or modified polyethylene grafted with acid anhydride groups.

Optionally, the modified polyolefin resin is selected from modified polypropylene grafted with maleic anhydride groups or modified polyethylene grafted with maleic anhydride groups.

In some embodiments, the modified polyethylene-vinyl acetate is a modified polyethylene-vinyl acetate grafted with an anhydride group.

Optionally, the modified polyethylene-vinyl acetate is a modified polyethylene-vinyl acetate grafted with a maleic anhydride group.

In these optional embodiments, these specific optional modified polymer resins described above are homologous to the resin forming the polymer film so that the compounding strength between the polymer film and the modified polymer resin solid film can be further improved.

In some embodiments, the heating the slurry coat and the polymer film is carried out at a heating temperature of from 50° C to 150° C for 10h to 48h.

In some embodiments of the present application, the heating the slurry coat and the polymer film is carried out at a heating temperature of 50° C, 60° C, 70° C, 80° C, 90° C, 100° C, 110° C, 120° C, 130° C, 140° C, 150° C, or in any other range comprising any two of the above endpoints.

Optionally, the heating the slurry coat and the polymer film is carried out at a heating temperature of from 80° C to 130° C.

In some embodiments of the present application, the heating the slurry coat and the polymer film is carried out for 10h, 11h, 12h, 13h, 14h, 15h, 16h, 17h, 18h, 19h, 20h, 21h, 22h, 23h, 24h, 25h, 26h, 27h, 28h, 29h, 30h, 31h, 32h, 33h, 34h, 35h, 36h, 37h, 38h, 39h, 40h, 41h, 42h, 43h, 44h, 45h, 46h, 47h, 48h, or in other ranges consisting of any two of the above endpoints.

Optionally, the heating the slurry coat and the polymer film is carried out for 20h to 30h.

The heating can remove solvent in the slurry coat to form a modified polymer resin solid film, and, since the polar group is grafted on the surface of the polymer film and the polar group is incorporated into the slurry coat, the polymer film and the slurry coat are mutually diffused with each other during heating so that a gradual interface between the polymer film and the modified polymer resin solid film is formed, which improves the compounding strength between the modified polymer resin solid film and the polymer film. In addition, the heating temperature described above can effectively reduce degradation of the polymer film.

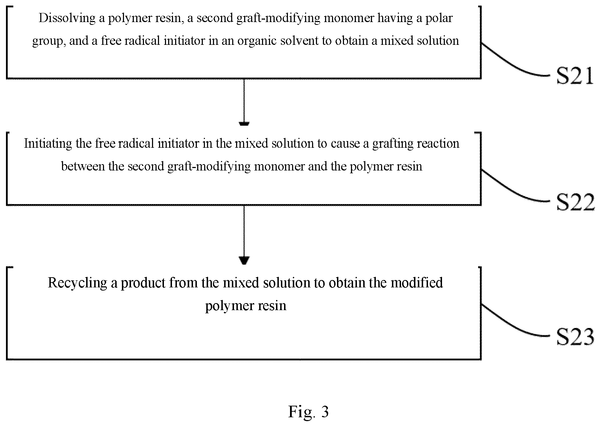

Fig. 3 illustrates a flowchart of an exemplary process for forming a modified polymer resin in a method for preparing a composite film.

In some embodiments, as shown in Fig. 3, step S2 further comprises preparing the modified polymer resin, comprising:

step S21 of dissolving a polymer resin, a second graft-modifying monomer having a polar group, and a free radical initiator in an organic solvent to obtain a mixed solution;

step S22 of initiating the free radical initiator in the mixed solution to cause a grafting reaction between the second graft-modifying monomer and the polymer resin; and

step S23 of recycling a product from the mixed solution to obtain the modified polymer resin.

In these optional embodiments, the graft modification is carried out by a solution method, which has a lower reaction temperature, fewer side reactions, is easy to manipulate, and has a low degree of degradation of the polymer resin.

In some embodiments, a mass ratio of the polymer resin, the second graft-modifying monomer and the free radical initiator in the mixed solution is in the range of 100:(1-5):(0.5-1).

Optionally, the mass ratio of the polymer resin, the second graft-modifying monomer and the free radical initiator in the mixed solution is 100: 3: 0.6.

In these optional embodiments, the above-described polymer resin, the second graft-modifying monomer and the free radical initiator have a suitable mass ratio so as to achieve modification of the surface of the polymer resin.

In some embodiments, initiating the free radical initiator in the mixed solution to cause a grafting reaction between the second graft-modifying monomer and the polymer resin is carried out by heating the mixed solution at a temperature of 100 to 140°C for 3h to 5h.

In these optional embodiments, the grafting reaction has a lower temperature, effectively reducing degradation degree of the polymer resin.

In some embodiments, the second graft-modifying monomer comprises unsaturated carboxylic anhydride or (meth)acrylate.

Optionally, the second graft-modifying monomer comprises maleic anhydride.

Composite Film

Embodiments of the present application further provide a composite film that can be prepared and obtained by any embodiment of the methods described above.

The composite film provided in the present application has both a higher mechanical strength and insulating performance, and a higher bonding strength, the polymer film and the modified polymer resin solid film that are compounded to form the composite film can better exert their respective advantages and make up for their respective shortcomings, producing a synergistic effect.

In some embodiments, the polymer film is a polyethylene film, and a modified polymer resin of the modified polymer resin solid film is a modified polyethylene grafted with anhydride groups.

Optionally, the modified polymer resin is a modified polyethylene grafted with maleic anhydride groups.

In some other embodiments, the polymer film is a polypropylene film, and a modified polymer resin of the modified polymer resin solid film is a modified polypropylene grafted with anhydride groups.

Optionally, the modified polymer resin is a modified polypropylene grafted with maleic anhydride groups.

In yet other embodiments, the polymer film is a polyethylene vinyl acetate film, and a modified polymer resin of the modified polymer resin solid film is a modified polyethylene vinyl acetate grafted with anhydride groups.

Optionally, the modified polymer resin is a modified polyethylene vinyl acetate grafted with maleic anhydride groups.

In these optional embodiments, the polymer film described above is compounded with the modified polymer resin solid film homologous to it, thereby obtaining a higher compounding strength.

In some embodiments, the modified polymer resin solid film has a thickness of from 10 $\mu$m to 50 $\mu$m.

In some embodiments of the present application, the modified polymer resin solid film has a thickness of 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, or in other ranges comprising any two of the above endpoints.

Optionally, the modified polymer resin solid film has a thickness of from 10 $\mu$m to 30 $\mu$m.

In these optional embodiments, the modified polymer resin solid film has a thickness of from 10 $\mu$m to 50 $\mu$m, and the above suitable thickness enables the modified polymer resin solid film to be stably bonded to the polymer film, and the bonding strength of the resulting composite film can be guaranteed when the composite film is applied to the battery module. In the case where the thickness of the modified polymer resin solid film is less than 10 $\mu$m, the finished composite film has a poor bonding strength, and when the composite film is applied to the battery module, it is not possible to ensure that the composite film is stably bonded to the secondary battery, and in the case where the thickness of the modified polymer resin solid film is more than 50 $\mu$m, the resulting composite film has a reduced mechanical strength since the modified polymer resin solid film has a low mechanical strength.

In some embodiments, the polymer film has a thickness of 50 $\mu$m to 130 $\mu$m.

In some embodiments of the present application, the polymer film has a thickness of 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, or in other ranges consisting of any two of the above endpoints.

Optionally, the polymer film has a thickness of 50 $\mu$m to 90 $\mu$m.

In these optional embodiments, the polymer film has a thickness of 50 $\mu$m to 130 $\mu$m, and the above suitable thickness allows the polymer film to have a certain mechanical strength and insulating performance. In the case where the thickness of the polymer film is less than 50 $\mu$m, the molding and insulating performance of the finished composite film are relatively poor, and in the case where the thickness of the polymer film is more than 120 $\mu$m, the total thickness of the composite film is too large, and its flexibility will deteriorate.

Embodiments of the present application further provide a composite film comprising a polymer film and a modified polymer resin solid film bonded to the surface of the polymer film, the modified polymer resin solid film having a thickness of 10 $\mu$m to 50 $\mu$m, and the polymer film having a thickness of 50 $\mu$m to 130 $\mu$m, wherein the polymer film is selected from a polyolefin film or a polyethylene vinyl acetate film, and a modified polymer resin of the modified polymer resin solid film is selected from a modified polyolefin resin grafted with a polar group or a modified polyethylene-vinyl acetate grafted with a polar group.

The polymer film of the present application is used as an insulating protective film for secondary batteries due to its excellent transparency, mechanical properties, electrical properties, etc., and the polymer film is prepared and formed from a polymer resin.

The polymer film of the present application has a thickness of 50 $\mu$m to 130 $\mu$m, and the above suitable thickness allows the polymer film to have a certain mechanical strength and insulating performance. In the case where the thickness of the polymer film is less than 50 $\mu$m, the molding and insulating performance of the finished composite film are relatively poor, and in the case where the thickness of the polymer film is more than 130 $\mu$m, the composite film has a too thick total thickness, and its softness will deteriorate.

The modified polymer resin solid film of the present application is grafted with polar groups and has a high bonding strength, and thus the modified polymer resin solid film can be tightly fitted on the surface of the polymer film. The modified polymer resin solid film and the polymer film both have similar or compatible surfaces, and the modified polymer resin solid film and the polymer film are able to form a stable connection when they contact with each other because of a low interfacial energy.

The modified polymer resin solid film of the present application has a thickness of from 10 $\mu$m to 50 $\mu$m, and the above suitable thickness enables the modified polymer resin solid film to be stably bonded to the polymer film, and the bonding strength of the resulting composite film can be guaranteed when the composite film is applied to the battery module. In the case where the thickness of the modified polymer resin solid film is less than 10 $\mu$m, the finished composite film has a poor bonding strength, and when the composite film is applied to the battery module, it is not possible to ensure that the composite film is stably bonded to the secondary battery, and in the case where the thickness of the modified polymer resin solid film is more than 50 $\mu$m, the resulting composite film has a reduced mechanical strength since the modified polymer resin solid film has a low mechanical strength.

The composite film provided by the embodiments of the present application includes a polymer film and a modified polymer resin solid film, the polymer film has a higher mechanical strength and insulating performance, the modified polymer resin solid film has a higher bonding strength, the polymer film and the modified polymer resin solid film that are compounded to form a composite film can better exert their respective advantages and make up for their respective shortcomings, producing a synergistic effect; and the composite film as a whole has a higher structural stability and has better fitting and bonding strength compared to a single protective film.

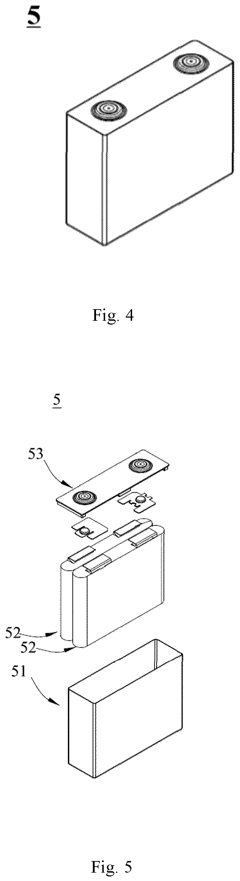

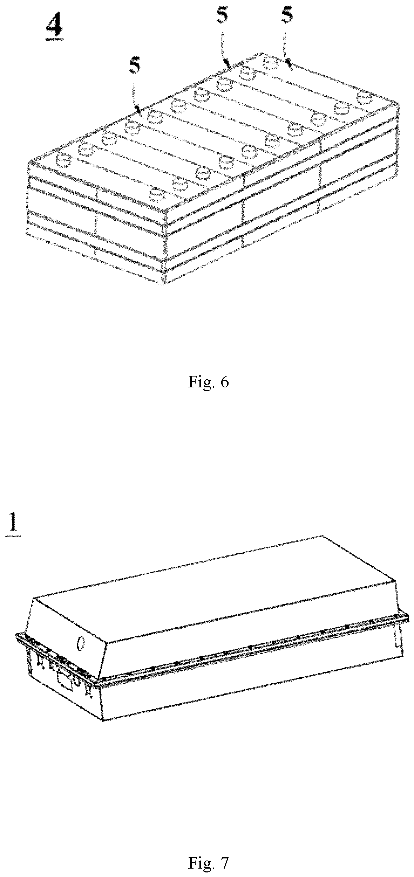

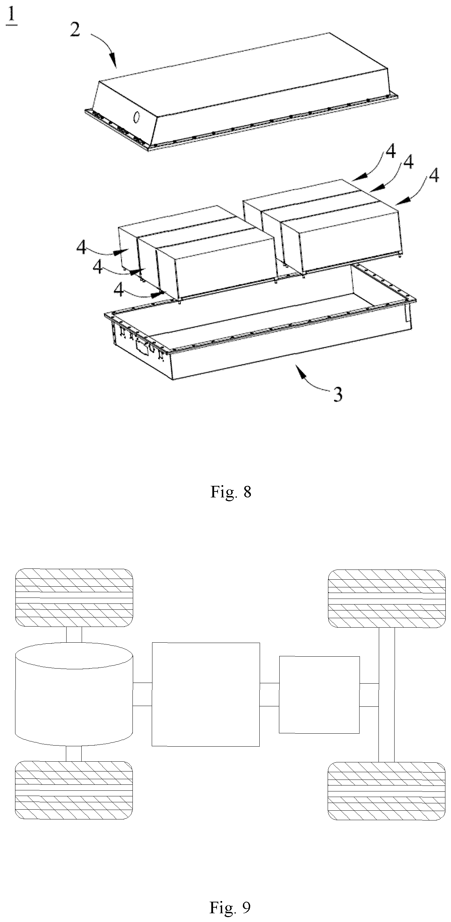

The secondary batteries, battery modules, battery packs, and electrical devices of the present application are described below with due reference to Figs. 4 through 9 of the accompanying drawings. Fig. 4 is a schematic diagram of a secondary battery according to an embodiment of the present application. Fig. 5 is an exploded schematic diagram of a secondary battery according to an embodiment of the present application shown in Fig. 4. Fig. 6 is a schematic diagram of a battery module according to an embodiment of the present application. Fig. 7 is a schematic diagram of a battery pack according to an embodiment of the present application. Fig. 8 is an exploded schematic diagram of a battery pack according to an embodiment of the present application shown in Fig. 7. Fig. 9 is a schematic diagram of an electrical device using the secondary battery according to an embodiment of the present application as a power source.

Battery module

A battery module comprises a secondary battery and a composite film, the composite film is wrapped around at least a portion of the secondary battery, and a modified polymer resin solid film in the composite film is adhered to the secondary battery, wherein the composite film is a composite film obtained by the above-described method or the above-described composite film.

In the battery module according to embodiments of the present application, based on adhesion of the composite film itself, the composite film is directly adhered to the secondary battery through the modified polymer resin solid film, without a thermal adhesive for bonding, and the composite film has a high bonding strength to the secondary battery, which effectively reduces the phenomenon of peeling off of the composite film from the secondary battery.

**Method of preparing a battery module**

The method of preparing a battery module comprises:
obtaining the battery module by wrapping a composite film around a surface of a secondary battery by means of hot pressing, wherein a modified polymer resin solid film in the composite film is adhered to the secondary battery.

According to the method of preparing a battery module of embodiments of the present application, the composite film is wrapped around the surface of the secondary battery by means of hot pressing. The method is simple and has an improved production efficiency, and the hot pressing is able to tightly fit the composite film on the surface of the secondary battery, ensuring that the composite film is tightly wrapped around the secondary battery. In addition, the composite film of the present application has a relatively small bonding strength at room temperature, which facilitates installation and application of the film, and the composite film has an increased bonding strength that is higher than that of the conventional thermal adhesive when it is subjected to hot pressing, and thus it is capable of stably covering the surface of the secondary battery.

In some embodiments, the hot pressing is carried out at a temperature of from 90°C to 180°C.

In some embodiments of the present application, the hot pressing is carried out at a temperature of 90° C, 100° C, 110° C, 120° C, 130° C, 140° C, 150° C, 160° C, 170° C, 180° C, or in other ranges comprising any two of the above endpoints.

Optionally, the hot pressing is carried out at a temperature of from 100°C to 150°C.

In these optional embodiments, the temperature for hot pressing is determined based on the modified polymer resin solid film, and the determined temperature can both ensure the bonding strength of the modified polymer resin solid film and reduce the degradation of the polymer film.

In some embodiments, the hot pressing is carried out at a pressure of from 0.1 MPa to 5 MPa.

In some embodiments of the present application, the hot pressing is carried out at a pressure of 0.1 MPa, 0.5 MPa, 1 MPa, 1.5 MPa, 2 MPa, 2.5 MPa, 3 MPa, 3.5 MPa, 4 MPa, 4.5 MPa, 5 MPa, or in other ranges comprising any two of the above endpoints.

Optionally, the hot pressing is carried out at a pressure of from 0.5 MPa to 5 MPa.

In these optional embodiments, the pressure for hot pressing is matched with the temperature for hot pressing, so that the composite film is tightly bonded to the surface of the secondary battery, and the composite film is ensured to have a certain thickness, so that it has a high mechanical strength and shear strength.

In some embodiments, the hot pressing is carried out for 1s to 10s.

In some embodiments of the present application, the hot pressing is carried out for 1s, 2s, 3s, 4s, 5s, 6s, 7s, 8s, 9s, 10s or in any other range consisting of any two of the above endpoints.

Optionally, the hot pressing is carried out for 3s to 5s.

In these optional embodiments, a suitable hot pressing period ensures that the composite film has a certain thickness, which results in the composite film having a high mechanical strength and shear strength.

In some embodiments, before the composite film is compounded to the surface of the secondary battery, the method further comprises sandblasting the surface of the secondary battery first, and then acidizing the surface.

Optionally, the sandblasting is performed with grits having a grain size of 2 mm and a compressed air pressure of 0.5 MPa. The type of grit is stainless steel grit, zirconium grit, or adamantine grit, and so on.

Optionally, the acidizing adopts hydrochloric acid, sulfuric acid or acetic acid, etc. for an acid washing treatment.

In these optional embodiments, the activation treatment, i.e., the sandblasting treatment and the acidizing treatment, of the surface of the secondary battery can remove impurities and an oxide film on the surface of the secondary battery, improve cleanliness of the surface of the secondary battery, as well as make the surface of the secondary battery have a certain degree of roughness, so as to make mechanical properties of the surface of the secondary battery improved, thereby increasing adhesion between the surface of the secondary battery and the composite film and prolonging durability of the composite film.

Typically, a secondary battery comprises a positive electrode plate, a negative electrode plate, an electrolyte, and a separator. During charging and discharging of the battery, active ions are intercalated and deintercalated back and forth between the positive and negative electrode plates. The electrolyte serves as a conductor of ions between the positive electrode plate and the negative electrode plate. The separator is disposed between the positive electrode plate and the negative electrode plate, which mainly plays the role of preventing the positive and negative electrode plates from short-circuiting, while allowing ions to pass through.

As an example, a positive electrode current collector has two opposite surfaces in its thickness direction, and a positive electrode active material film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material base layer and a metal material layer formed on at least one surface of the polymer material base layer. The composite current collector may be formed by forming a metal material including aluminum, aluminum alloy, nickel, nickel alloy, titanium, titanium alloy, silver and silver alloy on the polymer material base layer including polypropylene (PP), polyethylene terephthalate (PET), polybutylene terephthalate (PBT), polystyrene (PS) and polyethylene (PE).

In some embodiments, a positive electrode active material may be a positive electrode active material commonly known in the art for secondary batteries. For example, the positive electrode active material may include at least one of a lithium-containing phosphate with an olivine structure, a lithium transition metal oxide, and respective modified compounds thereof. The present application is not limited to these materials, and may also use other conventionally known materials that can be used as positive electrode active materials of batteries. These positive electrode active materials may be used alone, or may be combined with two or more. Examples of the lithium transition metal oxide may include, but are not limited to, at least one of lithium cobalt oxide (e.g., $LiCoO_3$), lithium nickel oxide (e.g., $LiNiO_3$), lithium manganese oxide (e.g., $LiMnO_3$, $LiMn_3O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_3$ (which may also be abbreviated as NCM333), $LiNi_{0.5}Co_{0.3}Mn_{0.3}O_3$ (also referred to as NCM533), $LiNi_{0.5}Co_{0.35}Mn_{0.35}O_3$ (also referred to as NCM311), $LiNi_{0.6}Co_{0.3}Mn_{0.3}O_3$ (also referred to as NCM633), $LiNi_{0.8}Co_{0.1}Mn_{0.1}O_3$ (which may also be referred to as NCM811)), lithium nickel cobalt aluminum oxide (e.g., $LiNi_{0.85}Co_{0.15}Al_{0.05}O_3$), and modified compounds thereof, and the like. Examples of lithium-containing phosphates with an olivine structure may include, but are not limited to, at least one of lithium iron phosphate (e.g., $LiFePO_4$ (which may also be abbreviated as LFP)), a composite of lithium iron phosphate and carbon, lithium manganese phosphate (e.g., LiMnPO$_4$), a composite of lithium manganese phosphate and carbon, lithium iron manganese phosphate, and a composite of lithium iron manganese phosphate and carbon.

In some embodiments, the positive electrode active material film layer may further include a conductive agent to improve its conductivity. There is no particular limitation to the type of the conductive agent in the present application, which may be selected according to actual demand. As an example, the conductive agent may be one or more of superconducting carbon, acetylene black, carbon black, Ketjen black, carbon dots, carbon nanotubes, graphite, graphene, and carbon nanofibers.

In some embodiments, the positive electrode active material film layer may further include a binder to firmly bond the positive electrode active material and optional conductive agent to the positive electrode current collector. There is no particular limitation on the type of the binder in the present application, which may be selected according to actual demand. As an example, the binder may be at least one of polyvinylidene fluoride (PVDF), polytetrafluoroethylene (PTFE), polyacrylic acid (PAA), polyvinyl alcohol (PVA), ethylene vinyl acetate copolymer (EVA), styrene butadiene rubber (SBR), carboxymethylcellulose (CMC), sodium alginate (SA), polymethylmethacrylic acid (PMA), and carboxymethyl chitosan (CMCS).

In some embodiments, the positive electrode current collector may be an electrically conductive carbon plate, a metal foil, a carbon coated metal foil, a porous metal plate, or a composite current collector, wherein the electrically conductive carbon plate is made of an electrically conductive carbon material that may be one or more of superconducting carbon, acetylene black, carbon black, Ketjen black, carbon dots, carbon nanotubes, graphite, graphene, and carbon nanofibers, and the metal foil, carbon coated metal foil, and porous metal plate is made of a metal material that each independently may be at least one selected from copper, aluminum, nickel and stainless steel. The composite current collector may be a composite current collector formed by compounding a metal foil with a polymer base film. The positive electrode current collector is, for example, one or more of a copper foil, an aluminum foil, a nickel foil, a stainless steel foil, a stainless steel mesh, and a carbon-coated aluminum foil, preferably an aluminum foil.

The above-described positive electrode plate is prepared in accordance with conventional methods in the art. Typically, the positive active material and optionally the conductive agent and binder are dispersed in a solvent (e.g., N-methylpyrrolidone, referred to as NMP) to form a homogeneous positive electrode slurry, and the positive electrode slurry is applied to the positive electrode collector, and then is dried, and cold pressed to obtain the positive electrode plate.

In some embodiments, the negative electrode plate comprises a negative electrode current collector and a negative electrode active material layer provided on at least one surface of the negative electrode current collector, said negative electrode active material layer comprising a negative electrode active material.

The negative electrode active material is a negative active material made by the preparation method of the first aspect of the present application or a negative active material of the present application. Accordingly, the preceding description of embodiments of the negative electrode active material according to the present application is equally applicable to the negative electrode active material in the secondary battery, and the same will not be repeated.

By way of example, the negative electrode current collector has two opposite surfaces in its thickness direction, and a negative electrode active material layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material base layer and a metal material layer formed on at least one surface of the polymer material base layer. The composite current collector may be formed by forming a metal material (e.g., copper, copper alloy, nickel, nickel alloy, titanium, titanium alloy, silver and silver alloy) on the polymer material base layer (e.g., a base layer of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for use in batteries. As examples, the negative electrode active material may include at least one of artificial graphite, natural graphite, soft carbon, hard carbon, silicon-based material, tin-based material, and the like. Said silicon-based material may be at least one selected from an elemental silicon, a silicon oxide, a silicon carbon composite, a silicon nitrogen composite, and a silicon alloy. Said tin-based material may be at least one selected from an elemental tin, a tin oxide, and a tin alloy. However, the present application is not limited to these materials and other conventional materials that can be used as negative electrode active materials for batteries can be used. Only one of these negative electrode active materials may be used alone, or a combination of more than two may be used.

In some embodiments, the negative electrode active material layer further optionally includes a binder. Said binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylatic acid (PMAA), and carboxymethyl chitosan (CMCS).

In some embodiments, the negative electrode active material layer further optionally includes a conductive agent. The conductive agent may be at least one selected from superconducting carbon, acetylene black, carbon black, Ketjen black, carbon dots, carbon nanotubes, graphene, and carbon nanofibers.

In some embodiments, the negative electrode active material layer optionally includes other additives, such as thickeners (e.g., sodium carboxymethylcellulose (CMC-Na)) and the like.

In some embodiments, the negative electrode plate can be prepared by: dispersing the above-described components for preparing the negative electrode plate, such as the negative electrode active material, the conductive agent, the binder, and any other components, in a solvent (e.g., deionized water) to form a negative electrode slurry; and applying the negative electrode slurry to the negative electrode collector followed by drying and cold pressing, thereby obtaining the negative electrode plate.

In some embodiments of the present application, the electrolyte serves to conduct ions between the positive electrode plate and the negative electrode plate. The present application has no specific limitation on the type of electrolyte, which may be selected according to the needs. For example, the electrolyte may be liquid, gel, or all-solid.

In some embodiments, said electrolyte adopts an electrolytic solution. Said electrolytic solution includes an electrolyte salt and a solvent.

In some embodiments, the electrolyte salt may be one or more of $NaPF_6$, $NaClO_4$, $NaBF_4$, $KPF_6$, $KClO_4$, $KBF_4$, $LiPF_6$, $LiClO_4$, $LiBF_4$, $Zn(PF_6)_3$, $Zn(ClO_4)_3$, and $Zn(BF_4)_3$.

In some embodiments, the electrolyte salt may be one or more selected from $NaPF_6$, $NaClO_4$, and $NaBF_4$.

In some embodiments, the solvent may be at least one selected from ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propanoate, ethyl propanoate, propyl propanoate, methyl butyrate, ethyl butyrate, 1,4 -butyrolactone, cyclobutanesulfone, dimethyl sulfone, methyl ethyl sulfone, and diethyl sulfone.

In some embodiments, said electrolytic solution optionally further comprises an additive. For example, the additives may include a negative electrode film-forming additive, a positive electrode film-forming additive, and may also include additives that can improve certain properties of batteries, such as additives that improve overcharge performance of batteries, additives that improve high or low temperature performance of batteries, and the like.

In some embodiments of the present application, there is no particular limitation on the type of the separator in the present application. The separator may be any known porous separator with good chemical and mechanical stability.

In some embodiments, the separator may be made of a material selected from at least one of glass fibers, a nonwoven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

The present application does not have particular limitation to the shape of the secondary battery. The secondary battery may be cylindrical, cuboid, or in any other shape. Fig. 4 shows a secondary battery 5 with a cuboid structure as an example.

In some embodiments, with reference to Fig. 5, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is capable of closing the opening to seal the accommodating cavity. The positive electrode plate, the negative electrode plate, and the separator may be wound or stacked to form an electrode assembly 52. The electrode assembly 52 is packaged in the accommodating cavity. The electrolytic solution infiltrates the electrode assembly 52. The secondary battery 5 includes one or more electrode assemblies 52, which may be selected by those skilled in the art according to actual specific requirements.

In some embodiments, the secondary battery according to the present application may be assembled into a battery module. The battery module may include one or more secondary batteries, and the specific quantity may be selected by those skilled in the art according to the application and capacity of the battery module.

Fig. 6 shows a battery module 4 as an example. As shown in Fig. 6, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, the battery pack may comprise one or more battery module and the quantity of the battery module included in the battery pack may be selected according to the application and capacity of the battery pack.

Fig. 7 and Fig. 8 show a battery pack 1 as an example. With reference to Fig. 7 and Fig. 8, the battery pack 1 may include a battery box and a plurality of battery modules 4 disposed in the battery box. The battery box includes an upper box body 2 and a lower box body 3. The upper box body 2 is capable of closing the lower box body 3 to form a closed space for accommodating the battery modules 4. A plurality of battery modules 4 may be arranged in the battery box in any manner.

The present application further provides an electrical device, which includes the battery module, or the battery pack provided by the present application. The battery module, or the battery pack may be used as a power supply of the electrical device or as an energy storage unit of the electrical device. The electrical device may comprise, but not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may adopt the battery module, or the battery pack according to its usage requirements.

Fig. 9 shows an electrical device as an example. The electrical device is a pure electric vehicle, a hybrid electric vehicle, a plug-in hybrid electric vehicle, or the like. In order to meet requirements of the electrical device for high power and high energy density of secondary batteries, the battery pack or the battery module may be used.

As another example, the device may be a mobile phone, a tablet computer, a notebook computer, or the like. The electrical device is generally required to be thin and light, so the secondary battery may be used as a power supply.

**Examples**

Examples of the present application are described below. The examples described below are exemplary and are intended only to explain the present application and are not to be construed as a limitation of the present application. Where specific techniques or conditions are not indicated in the examples, they are in accordance with the techniques or conditions described in the literature in the field or in accordance with the product specification. Where no manufacturer is indicated for the reagents or instruments used, they are conventional products that can be obtained through commercially available purchases.

Example 1

Manufacture of lithium ion batteries

(1) Preparation of the positive electrode plate

The positive electrode active material, Super P as a conductive agent, and polyvinylidene fluoride (PVDF) as a binder were mixed in an appropriate amount of NMP with sufficient stirring at a mass ratio of 95:3:2, so as to form a homogeneous positive electrode slurry, wherein the positive electrode slurry had a viscosity of 6200 mPas and the positive electrode slurry was allowed to stand for 48 hours without gelling, delaminating, or settling; and the positive electrode slurry had a solid content of 70%. The positive electrode slurry was applied to the surface of an aluminum foil as a positive electrode current collector, and then was dried and cold pressed, thereby obtaining the positive electrode plate.

(2) Preparation of the negative electrode plate

Artificial graphite as a negative electrode active material, Super P as a conductive agent, SBR as a binder SBR, and CMC-Na as a thickener were mixed in an appropriate amount of deionized water at a mass ratio of 95: 2: 2: 2: 1, so as to form a uniform negative electrode slurry. The negative electrode slurry was applied to the surface of a copper foil as a negative electrode collector, and then dried and cold pressed, thereby obtaining the negative electrode plate.

(3) Separator

A PP/PE composite separator was used.

(4) Preparation of electrolytic solution

Ethylene carbonate (EC), diethyl carbonate (DEC), dimethyl carbonate (DMC) were mixed at a volume ratio of 1:1:1, and then $LiPF_6$ was uniformly dissolved in the above solvent to obtain an electrolytic solution. In the electrolytic solution, $LiPF_6$ was present in a concentration of 1 mol/L, and the electrolytic solution has an ionic conductivity of 10 mS/cm at 25°C.

(5) Preparation of secondary battery

The positive electrode plate, separator, and negative electrode plate were stacked and wound in sequence to obtain an electrode assembly, the electrode assembly was put into an outer package, to which the electrolytic solution prepared as described above was added, and the secondary battery was obtained after encapsulation, resting, formation, aging, and other processes.

Method of preparing a composite film

(1) 5g of maleic anhydride and 1g of benzoyl peroxide were dissolved in 100g of N-methylpyrrolidone to formulate an activation solution, the activation solution was applied on the surface of a polypropylene film by scrape coating. The activation solution was heated at a temperature of 120 to 150°C for 1h to 3h to initiate benzoyl peroxide so as to make maleic anhydride grafted onto the surface of the polypropylene film, and to activate the surface of the polypropylene film.

(2) 100 g of polypropylene, 3 g of maleic anhydride, 0.6 g of benzoyl peroxide, and 100 mL of xylene were added to a reactor, and the reaction system was raised to 120° C with stirring to dissolve solids contained therein. And then, it was allowed to continue to react the reaction system for 4 h at this temperature. At the end of the reaction, the product was poured into 1,000 mL of deionized water. The solid was precipitated, filtered and then recycled, and the resulting solid was washed with deionized water for three times, and dried to obtain anhydride-modified polypropylene. A slurry comprising the anhydride-modified polypropylene at a mass concentration of 10% was scrapped onto the activated surface of the polypropylene film, with a scraping thickness of 100 $\mu$m to form a slurry coat.

(3) The slurry coat and the polypropylene film were heated at a temperature of 120° C for 1 h, and then at a temperature of 50° C for 24 h to form an acid anhydride-modified polypropylene film to obtain the composite film.

Method of preparing battery modules

The surface of the aluminum housing of the secondary battery was sandblasted using stainless steel sand with a particle size of 2mm, powered by 0.5MPa compressed air, and then the surface of the aluminum housing was wiped with a 5wt% hydrochloric acid solution to remove stains, and then cleaned with deionized water, and then blown-dried at a temperature of 80°C for spare use.

The composite film was wrapped on the surface of the aluminum housing using a film wrapping machine, and hot pressed at a pressure of 0.5 MPa and a temperature of 150°C for 5s to obtain a battery module, wherein an anhydride-modified polypropylene film was adhered to the surface of the aluminum housing, the thickness of the anhydride-modified polypropylene film was 20 $\mu$m, and the thickness of the polypropylene film was 80 $\mu$m.

Examples 2 to 5 and Comparative Examples 1 to 3 were prepared in a similar manner to Example 1 in which the polyolefin films were equal, and the hot pressing conditions were the same, with the differences that the surface of the polymer film was not activated, and the compositions of the activation solution and the modified polymer resin were adjusted. The relevant parameters of Examples 1 to 5, and Comparative Examples 1 to 3 were shown in Table 1.

Examples 6-13 and Comparative Examples 4 to 11 were prepared in a similar manner to Example 1 with the difference that the polymer film was one selected from a polyethylene film, a polypropylene film, or a polyethylene-vinyl acetate film, the modified polymer resin solid film was selected from an anhydride-modified polyethylene film, an anhydride-modified polypropylene film, or an anhydride-modified polyethylene-vinyl acetate film, the thickness of the polymer film was adjusted and the thickness of the modified polymer resin solid film was adjusted. The relevant parameters of Examples 6 to 13, and Comparative Example 4 to 11 were shown in Table 2.

Examples 14 to 19, and Comparative Examples 12 to 16 were prepared in a similar manner to Example 1 with the difference of hot pressing temperature, hot pressing time, and hot pressing pressure. The relevant parameters for Examples 14 to 19 and Comparative Examples 12 to 16 were shown in Table 3.

The composite films of the Examples and the Comparative Examples were tested according to the following test methods.

(1) Tensile Strength

A 1 × 10 cm rectangular composite film sample was cut and its thickness t was measured. The composite film was loaded between the test clamps, with a distance between the upper and lower clamps of 5 cm. The tensile property was tested using a UTM6000 universal testing machine at a test speed of 5 mm/min. After the test was completed, the tensile strength ($\sigma$) was calculated by the maximum force F recorded by the instrument according to the following formula.

$$\sigma=F/(0.01{\times}t)$$

(2) Shear strength

The composite film was cut into a rectangular strip of 2.5×10cm, attached to the surface of an aluminum plate, and tested with reference to the method of GB/T 7124-2008.

(3) Insulation voltage withstand test

The composite film was cut into a rectangular strip of 5×5cm, attached to the surface of an aluminum plate, and tested by SMR990 insulation voltage instrument for voltage withstanding at 2000kV for a period of 30s. If the leakage current ≤ 1.5mA, the sample passed the test.

(4) Adhesion

In accordance with the method of GB/T 9286-1998, the protective film was adhered to the surface of 150 × 100mm aluminum plate, which was placed on a horizontal rigid plane. The sample was cut vertically using a Baguette cutter, and all cuts should be made through to the surface of the substrate. Subsequently, the same number of cuts were made in a direction of 90° intersection with the original cut line to form grid lines. Subsequently, using a soft-bristle brush, the sample was swept several times, and then a transparent tape was applied to the top of the grid, flatten, and then removed. The adhesion of the protective film was determined according to an adhesion grading scale.

(5) Aging test

The protective film was cut into a rectangular strip of 2.5 × 10 cm, adhered to the surface of an aluminum plate, and subjected to 85°C/85% for 1000h to test the shear strength and adhesion of the protective film after aging.

Table 1. Parameter results of Examples 1 to 5 vs. Comparative Examples 1 to 3

| No. | Graft modifying monomer in activation solution | Free radical initiator in activation solution | Organic solvent in activation solution | Heating temperature of activation solution | Heating time of activation solution | Polyolefin film | Tensile strength MPa | Adhesion | Shear strength MPa | Insulation voltage withstand | Adhesion after aging | Shear strength after aging MPa |
|---|---|---|---|---|---|---|---|---|---|---|---|---|
| Example 1 | Maleic anhydride | benzoyl peroxide | N-methylpyrrolidone | 120°C | 1h | Polypropylene film | 40 | grade 0 | 9.2 | OK | grade 0 | 4.5 |
| Example 2 | Maleic anhydride | benzoyl peroxide | Xylene | 130°C | 1h | Polypropylene film | 39 | grade 0 | 9.0 | OK | grade 0 | 4.4 |
| Example 3 | Maleic anhydride | benzoyl peroxide | Decahydronaphthalene | 120°C | 2h | Polypropylene film | 40 | grade 0 | 9.0 | OK | grade 0 | 4.2 |
| Example 4 | Maleic anhydride | benzoyl peroxide | N-methylpyrrolidone | 120°C | 3h | Polyethylene film | 36 | 0 grade | 9.3 | OK | 0 grade | 4.0 |
| Example 5 | Maleic anhydride | benzoyl peroxide | N-methylpyrrolidone | 150°C | 3h | Polyethylene-vinyl acetate film | 45 | 0 grade | 8.8 | OK | 0 grade | 3.2 |
| Comparative Example 1 | -- | -- | -- | -- | -- | Polypropylene film | 40 | / | / | / | / | / |
| Comparative Example 2 | Maleic anhydride | benzoyl peroxide | N-methylpyrrolidone | 200°C | 1h | Polypropylene film | 40 | 0 grade | 9.0 | OK | 0 grade | 4.2 |
| Comparative Example 3 | Maleic anhydride | benzoyl peroxide | N-methylpyrrolidone | 50°C | 1h | Polypropylene film | 40 | 0 grade | 7.5 | OK | 0 grade | 4.0 |

Table 2. Parameter results of Examples 1, 6-13 and Comparative Examples 4 to 11

| No. | Polyolefin film | Thickness μm | Modified polyolefin resin solid film | Thickness μm | Tensile strength in MPa | Adhesion | Shear strength in MPa | Insulation voltage withstand | Adhesion after aging | Shear strength after aging in MPa |
|---|---|---|---|---|---|---|---|---|---|---|
| Example 1 | Polypropylene film | 80 | Anhydride modified polypropylene film | 20 | 40 | 0 grade | 9.2 | Ok | 0 grade | 4.5 |
| Example 6 | Polypropylene film | 80 | Anhydride modified polyethylene film | 20 | 39 | 0 grade | 8.2 | OK | 1 grade | 3.6 |
| Example 7 | Polypropylene film | 80 | Anhydride modified polyethylene-vinyl acetate film | 20 | 42 | 0 grade | 7.8 | OK | 1 grade | 3.2 |
| Example 8 | Polypropylene film | 50 | Anhydride modified polypropylene film | 20 | 39 | 0 grade | 8.5 | Ok | 0 grade | 4.1 |
| Example 9 | Polypropylene film | 120 | Anhydride modified polypropylene film | 20 | 42 | 0 grade | 10.4 | Ok | 0 grade | 4.3 |
| Example 10 | Polypropylene film | 80 | Anhydride modified polypropylene film | 10 | 41 | 0 grade | 9.0 | Ok | 1 grade | 4.4 |
| Example 11 | Polypropylene film | 80 | Anhydride modified polypropylene film | 50 | 36 | 0 grade | 8.2 | Ok | 2 grade | 3.0 |
| Example 12 | Polyethylene film | 80 | Anhydride modified polyethylene film | 20 | 37 | 0 grade | 8.7 | Ok | 0 grade | 4.6 |
| Example 13 | Polyethylene-vinyl acetate film | 80 | Anhydride modified polyethylene-vinyl acetate film | 20 | 44 | 0 grade | 9.5 | Ok | 0 grade | 4.0 |
| Comparative Example 4 | Polypropylene film | 80 | Acrylic Pressure Sensitive Adhesive | 20 | 40 | 0 grade | 9.2 | Ok | 0 grade | 4.5 |
| Comparative Example 5 | Polyethylene film | 80 | Acrylic Pressure Sensitive Adhesive | 20 | 36 | 0 grade | 6.8 | Ok | 0 grade | 2.0 |
| Comparative Example 6 | Polyethylene-vinyl acetate film | 80 | Acrylic Pressure Sensitive Adhesive | 20 | 44 | 0 grade | 7.2 | Ok | 0 grade | 2.2 |
| Comparative Example 7 | Polyethylene terephthalate film | 80 | Acrylic Pressure Sensitive Adhesive | 20 | 46 | 0 grade | 7.6 | Ok | 0 grade | 2.5 |

| No. | Polyolefin film | Thickness μm | Modified polyolefin resin solid film | Thickness μm | Tensile strength in MPa | Adhesion | Shear strength in MPa | Insulation voltage withstand | Adhesion after aging | Shear strength after aging in MPa |
|---|---|---|---|---|---|---|---|---|---|---|
| Comparative Example 8 | Polypropylene film | 20 | Anhydride modified polypropylene film | 50 | 25 | 0 grade | 5.3 | Ok | 0 grade | 3.0 |
| Comparative Example 9 | Polypropylene film | 150 | Anhydride modified polypropylene film | 20 | 51 | 1 grade | 6.5 | Ok | 3 grade | 3.6 |
| Comparative Example 10 | Polypropylene film | 80 | Anhydride modified polypropylene film | 5 | 40 | 3 grade | 1.6 | Ok | 3 grade | Peeling off |
| Comparative Example 11 | Polypropylene film | 80 | Anhydride modified polypropylene film | 80 | 43 | 1 grade | 7.2 | Ok | 0 grade | 2.8 |

Table 3. Parameter results of Examples 1, 14-19 and Comparative Examples 12 to 16

| No. | Hot pressing time in s | Hot pressing pressure in MPa | Hot pressing temperature in °C | Adhesion | Shear strength in MPa | Insulation voltage withstand | Adhesion after aging | Shear strength after aging in MPa |
|---|---|---|---|---|---|---|---|---|
| Example 1 | 5 | 0.5 | 120 | 0 grade | 9.2 | Ok | 0 grade | 4.5 |
| Example 14 | 1 | 0.5 | 120 | 0 grade | 7.9 | Ok | 0 grade | 4.2 |
| Example 15 | 10 | 0.5 | 120 | 0 grade | 8.8 | Ok | 0 grade | 4.1 |
| Example 16 | 5 | 0.1 | 120 | 0 grade | 9.0 | Ok | 0 grade | 4.2 |
| Example 17 | 5 | 5 | 120 | 0 grade | 10.5 | Ok | 0 grade | 4.8 |
| Example 18 | 5 | 0.5 | 90 | 1 grade | 8.9 | Ok | 0 grade | 4.5 |
| Example 19 | 5 | 0.5 | 180 | 0 grade | 7.4 | Ok | 0 grade | 3.4 |
| Comparative Example 12 | -- | -- | -- | 4 grade | 0.6 | OK | / | / |
| Comparative Example 13 | 20 | 0.5 | 120 | 0 grade | 9.0 | Ok | 0 grade | 4.5 |
| Comparative Example 14 | 5 | 10 | 120 | 1 grade | 8.7 | OK | 1 grade | 4.0 |
| Comparative Example 15 | 5 | 0.05 | 120 | 0 grade | 7.5 | OK | 0 grade | 3.3 |
| Comparative Example 15 | 5 | 0.5 | 50 | 4 grade | 0.9 | OK | 4 grade | 0.4 |
| Comparative Example 16 | 5 | 0.5 | 250 | 2 grade | 8.5 | NG | 2 grade | 2.2 |

Based on the above results, it can be seen that Examples 1 through 19 all have achieved good results.

In the present application, by applying the slurry to the activated surface of the polymer film, surface modification occurs after the surface of the polymer film is activated so that the polymer film has a stronger bonding force to the resulting modified polyolefin resin solid film. Moreover, since the polar group is grafted on the surface of the polymer film and the polar group is incorporated into the slurry coat, the polymer film and the slurry coat are mutually diffused with each other during heating so that a gradual interface between the polymer film and the modified polymer resin solid film is formed, which not only reduces the interfacial energy between the modified polymer resin solid film and the polymer film, but also improves the compounding strength between the two films. The resulting composite film not only has a higher mechanical strength, insulting performance and shear strength, but also has a higher bonding strength. The polymer film and the modified polymer resin solid film are compounded to form a composite film, which can better exert their respective advantages and make up for their respective shortcomings, producing a synergistic effect.

The method of preparing the composite film of Examples 1 to 5 is mainly characterized by the tensile strength of the composite film. In Comparative Examples 1, 2 and 3, contacting the surface of the polymer film with an activation solution is not suitable for the process conditions described above, and the compounding of the polymer film with the modified polymer resin solid film is of poor stability.

With further reference to Examples 1 to 12 and 13, the polymer film is compounding with a modified polymer resin solid film homologous to it, which has a higher compounding strength.

With further reference to Examples 8 to 11, the modified polymer resin solid film has a thickness of from 10 $\mu$m to 50 $\mu$m, and the above suitable thickness enables the modified polymer resin solid film to be stably bonded to the polymer film, and when the composite film is applied to the battery module, the bonding strength of the composite film can be guaranteed. The polymer film has a thickness of from 50 $\mu$m to 130 $\mu$m, and the above suitable thickness makes the composite film have a certain mechanical strength and insulating performance.

With further reference to Examples 14 to 19, the composite film is wrapped around the surface of the secondary battery by means of hot pressing. The method is simple and has an improved production efficiency, and the hot pressing can tightly fit the composite film on the surface of the secondary battery, ensuring that the composite film is tightly wrapped around the secondary battery. In addition, the composite film of the present application has a small bonding strength at room temperature, which facilitates installation and application of the film, and the composite film has an increased bonding strength that is higher than that of the conventional heat-sensitive adhesive when it is subjected to hot pressing, and thus it is capable of stably covering the surface of the secondary battery.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A method of preparing a composite film comprising:

    activating a surface of a polymer film by grafting the polymer film with a polar group on the surface, wherein the polymer film is selected from a polyolefin film or a polyethylene-vinyl acetate film;
    applying a slurry comprising a modified polymer resin grafted with a polar group to the activated surface of the polymer film to form a slurry coat, wherein the modified polymer resin is selected from a modified polyolefin resin grafted with a polar group or a modified polyethylene-vinyl acetate grafted with a polar group; and
    heating the slurry coat and the polymer film to transform the slurry coat into a modified polymer resin solid film, thereby obtaining the composite film.

2. The method of preparing a composite film as claimed in claim 1, wherein the activating a surface of a polymer film comprises:

    providing an activation solution, wherein the activation solution comprises a free radical initiator and a first graft-modifying monomer having a polar group dissolved in an organic solvent; and
    initiating the free radical initiator in the presence of contacting the surface of the polymer film with the activation solution so as to enable the graft-modifying monomer to be grafted to the surface of the polymer film.

3. The method of preparing a composite film as claimed in claim 2, wherein the activation solution satisfies one or more of (1) to (5):

    (1) the first graft-modifying monomer comprises unsaturated carboxylic anhydride or (meth)acrylate, and optionally comprises maleic anhydride;
    (2) the free radical initiator is one or more selected from dicumyl peroxide, benzoyl peroxide, tert-butyl laurate peroxide, tert-butyl benzoate peroxide, and tert-butyl acetate peroxide;
    (3) the organic solvent is one or more selected from N-methylpyrrolidone, xylene, decahydronaphthalene, turpentine or mineral oil;
    (4) the first graft-modifying monomer is present in the activation solution in a mass percentage of 0.5% to 1%, optionally 0.7% to 0.8%; and/or
    (5) the free radical initiator is present in the activation solution in a mass percentage of 0.1% to 0.5%, optionally 0.1% to 0.3%; and/or

    the initiating the free radical initiator to cause the first graft-modifying monomer to be grafted to the surface of the polymer film is carried out by heating the activation solution at a temperature of 130 to 150°C for 1h to 3h.

4. The method of preparing a composite film as claimed in claim 1, wherein the composite film satisfies one or more of (6) to (10):

    (6) the polyolefin film is selected from a polypropylene film or a polyethylene film;
    (7) the slurry has a mass concentration of 5% to 15%, optionally 8% to 13%;
    (8) the modified polyolefin resin is selected from modified polypropylene grafted with acid anhydride groups or modified polyethylene grafted with acid anhydride groups, optionally from modified polypropylene grafted with maleic anhydride groups or modified polyethylene grafted with maleic anhydride groups;
    (9) the modified polyethylene-vinyl acetate is a modified polyethylene-vinyl acetate grafted with an anhydride group, and optionally, a modified polyethylene-vinyl acetate grafted with a maleic anhydride group;
    (10) the heating the slurry coat and the polymer film is carried out at a heating temperature of from 50 °C to 150 °C for 10h to 48h, optionally from 80 °C to 130 °C for 20h to 30h.

5. The method of preparing a composite film as claimed in any one of claims 2 to 4, wherein the method further comprises preparing the modified polymer resin, comprising:

dissolving a polymer resin, a second graft-modifying monomer having a polar group, and a free radical initiator in an organic solvent to obtain a mixed solution;
initiating the free radical initiator in the mixed solution to cause a grafting reaction between the second graft-modifying monomer and the polymer resin;
recycling a product from the mixed solution to obtain the modified polymer resin.

6. The method of preparing a composite film as claimed in claim 5, wherein

a mass ratio of the polymer resin, the second graft-modifying monomer and the free radical initiator in the mixed solution is in the range of 100:(1-5):(0.5-1); and/or
initiating the free radical initiator in the mixed solution to cause a grafting reaction between the second graft-modifying monomer and the polymer resin is carried out by heating the mixed solution at a temperature of from 100 to 140°C for 3h to 5h; and/or,
the second graft-modifying monomer comprises unsaturated carboxylic anhydride or (meth)acrylate, and optionally comprises maleic anhydride.

7. A composite film obtainable by the method as claimed in any one of claims 2 to 6.

8. The composite film as claimed in claim 7, wherein the composite film satisfies one or more of (11) to (13):

(11) the polymer film is a polyethylene film, and a modified polymer resin of the modified polymer resin solid film is a modified polyethylene grafted with anhydride groups, optionally, a modified polyethylene grafted with maleic anhydride groups;
(12) the polymer film is a polypropylene film, and a modified polymer resin of the modified polymer resin solid film is a modified polypropylene grafted with anhydride groups, optionally, a modified polypropylene grafted with maleic anhydride groups;
(13) the polymer film is a polyethylene vinyl acetate film, and a modified polymer resin of the modified polymer resin solid film is a modified polyethylene vinyl acetate grafted with anhydride groups, optionally, a modified polyethylene vinyl acetate grafted with maleic anhydride groups.

9. The composite film as claimed in claim 7 or 8, wherein the modified polymer resin solid film has a thickness of from 10 $\mu$m to 50 $\mu$m, optionally from 10 $\mu$m to 30 $\mu$m.

10. The composite film as claimed in any one of claims 7 to 9, wherein the polymer film has a thickness of from 50 $\mu$m to 130 $\mu$m, optionally from 50 $\mu$m to 90 $\mu$M.

11. A composite film comprising a polymer film and a modified polymer resin solid film bonded to the surface of the polymer film, the modified polymer resin solid film having a thickness of 10 $\mu$m to 50 $\mu$m, and the polymer film having a thickness of 50 $\mu$m to 130 $\mu$m, wherein the polymer film is selected from a polyolefin film or a polyethylene vinyl acetate film, the modified polymer resin solid film is made of a modified polymer resin selected from a modified polyolefin resin grafted with a polar group or a modified polyethylene-vinyl acetate grafted with a polar group.

12. A battery module comprising

a secondary battery and
a composite film, the composite film being wrapped around at least a portion of the secondary battery, and a modified polymer resin solid film in the composite film being adhered to the secondary battery, wherein the composite film is the composite film obtained by the method as claimed in any one of claims 1 to 6 or the composite film as claimed in any one of claims 7 to 10.

13. A method of preparing a battery module, comprising
obtaining the battery module by wrapping a composite film around a surface of a secondary battery by means of hot pressing, wherein a modified polymer resin solid film in the composite film is adhered to the secondary battery.

14. The method of preparing a battery module as claimed in claim 13, wherein the hot pressing satisfies one or more of (14) to (16):

(14) the hot pressing is carried out at a temperature of from 90°C to 180°C, optionally 100°C to 150°C;
(15) the hot pressing is carried out at a pressure of from 0.1 MPa to 5 MPa, optionally 0.5 MPa to 5 MPa; and
(16) the hot pressing is carried out for 1s to 10s, optionally 3s to 5s.

15. The method of preparing a battery module as claimed in claim 13, wherein, before the composite film is compounded to the surface of the secondary battery, the method further comprises sandblasting the surface of the secondary battery first, and then acidizing the surface.

16. A battery pack, comprising the battery module as claimed in claim 12 or the battery module obtained by the method as claimed in any one of claims 13 to 15.

17. An electrical device, comprising the battery module as claimed in claim 12 and the battery module obtained by the method as claimed in any one of claims 13 to 15 or the battery pack as claimed in claim 16.

Activating a surface of a polymer film by grafting the polymer film with a polar group on the surface

S1

Applying a slurry comprising a modified polymer resin grafted with a polar group to the activated surface of the polymer film to form a slurry coat

S2

Heating the slurry coat and the polymer film to transform the slurry coat into a modified polymer resin solid film, thereby obtaining the composite film

S3

Fig. 1

Providing an activation solution

S11

Initiating the free radical initiator in the presence of contacting the surface of the polymer film with the activation solution so as to enable the graft-modifying monomer to be grafted to the surface of the polymer film

S12

Fig. 2

Dissolving a polymer resin, a second graft-modifying monomer having a polar group, and a free radical initiator in an organic solvent to obtain a mixed solution

S21

Initiating the free radical initiator in the mixed solution to cause a grafting reaction between the second graft-modifying monomer and the polymer resin

S22

Recycling a product from the mixed solution to obtain the modified polymer resin

S23

Fig. 3

**5**

Fig. 4

**5**

53

52
52
51

Fig. 5

Fig. 6

Fig. 7

Fig. 8

Fig. 9

| | INTERNATIONAL SEARCH REPORT | International application No. |
|---|---|---|
| | | **PCT/CN2022/119799** |

**A. CLASSIFICATION OF SUBJECT MATTER**

C09J 7/00(2018.01)i; C09J 7/30(2018.01)i; C09J 123/00(2006.01)i; C09J 151/06(2006.01)i; H01L 31/048(2014.01)i

According to International Patent Classification (IPC) or to both national classification and IPC

**B. FIELDS SEARCHED**

Minimum documentation searched (classification system followed by classification symbols)

C09J; H01L

Documentation searched other than minimum documentation to the extent that such documents are included in the fields searched

Electronic data base consulted during the international search (name of data base and, where practicable, search terms used)

CNTXT, ENTXTC, VEN, ENTXT, CJFD, CNKI, 万方, WANFANG, Web of science, 超星读秀, DUXIU: 电池, 复合膜, 多层膜, 聚合物, 树脂, 聚烯烃, 聚乙烯, 聚丙烯, PE, PP, 乙烯, 醋酸乙烯酯, EVA, PEVA, 极性基团, 酸酐, 丙烯酸, 接枝, 改性, 涂布, 涂覆, 包覆, 加热, 升温, 厚度, 粘结强度, battery, cell, film, membrane, polymer, polyolefine, polyolepine, polyethylene, polythene, polypropylene, PP, PE, polyethylene vinyl acetate, EVA, PEVA, polar group, anhydride, acrylic, acrylate, modify, graft, coat, butter, paint, heat, thickness, bond strength , cohesive strength

**C. DOCUMENTS CONSIDERED TO BE RELEVANT**

| Category* | Citation of document, with indication, where appropriate, of the relevant passages | Relevant to claim No. |
|---|---|---|
| X | CN 111423824 A (HANGZHOU FIRST APPLIED MATERIAL CO., LTD.) 17 July 2020 (2020-07-17)<br>     description, paragraphs [0007]-[0022] | 1-8, 12-13, 15-17 |
| A | CN 104282865 A (ZTE INNOVATIVE MATERIALS TECHNOLOGY CO., LTD.) 14 January 2015 (2015-01-14)<br>     entire document | 1-17 |
| A | CN 110993859 A (WUHAN ZIMT NEW MATERIAL TECHNOLOGY CO., LTD.) 10 April 2020 (2020-04-10)<br>     entire document | 1-17 |
| A | CN 102863915 A (NINGBO VIKELITE PERFORMANCE PLASTICS CO., LTD.) 09 January 2013 (2013-01-09)<br>     entire document | 1-17 |
| A | US 4599385 A (HERCULES INC.) 08 July 1986 (1986-07-08)<br>     entire document | 1-17 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2023** | **28 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 467 621 A1**

**C. DOCUMENTS CONSIDERED TO BE RELEVANT**

| Category* | Citation of document, with indication, where appropriate, of the relevant passages | Relevant to claim No. |
|---|---|---|
| A | CN 103525319 A (GUANGZHOU T-PHOTON TECHNOLOGY CO., LTD.) 22 January 2014 (2014-01-22) <br> entire document | 1-17 |
| A | CN 114958216 A (CYBRID TECHNOLOGIES INC.) 30 August 2022 (2022-08-30) <br> entire document | 1-17 |
| A | US 2018248156 A1 (DAINIPPON INK & CHEMICALS) 30 August 2018 (2018-08-30) <br> entire document | 1-17 |
| A | WO 2022065286 A1 (TOAGOSEI CO., LTD.) 31 March 2022 (2022-03-31) <br> entire document | 1-17 |
| A | Thien An Phung Hai, et al. "Surface modification of polypropylene with poly(3-hexylthiophene) via oxidative polymerization" <br> *Reactive and Functional Polymers,* No. 122, 05 December 2017 (2017-12-05), ISSN: 1381--514, <br> pages 167-174 | 1-17 |

Form PCT/ISA/210 (second sheet) (January 2015)

**INTERNATIONAL SEARCH REPORT**
Information on patent family members

International application No.

**PCT/CN2022/119799**

| Patent document cited in search report | | | Publication date (day/month/year) | Patent family member(s) | | | Publication date (day/month/year) |
|---|---|---|---|---|---|---|---|
| CN | 111423824 | A | 17 July 2020 | WO | 2021253612 | A1 | 23 December 2021 |
|  |  |  |  | EP | 3957694 | A1 | 23 February 2022 |
|  |  |  |  | JP | 2022541719 | A | 27 September 2022 |
|  |  |  |  | CN | 111423824 | B | 22 September 2020 |
| CN | 104282865 | A | 14 January 2015 | CN | 104282865 | B | 11 January 2017 |
| CN | 110993859 | A | 10 April 2020 | None | | | |
| CN | 102863915 | A | 09 January 2013 | CN | 102863915 | B | 30 April 2014 |
| US | 4599385 | A | 08 July 1986 | US | 4675210 | A | 23 June 1987 |
| CN | 103525319 | A | 22 January 2014 | CN | 103525319 | B | 11 March 2015 |
| CN | 114958216 | A | 30 August 2022 | None | | | |
| US | 2018248156 | A1 | 30 August 2018 | KR | 20180037215 | A | 11 April 2018 |
|  |  |  |  | EP | 3342838 | A1 | 04 July 2018 |
|  |  |  |  | JP | 6143147 | B1 | 07 June 2017 |
|  |  |  |  | TW | 201715003 | A | 01 May 2017 |
|  |  |  |  | CN | 107922806 | A | 17 April 2018 |
|  |  |  |  | WO | 2017038615 | A1 | 09 March 2017 |
| WO | 2022065286 | A1 | 31 March 2022 | TW | 202218552 | A | 16 May 2022 |

Form PCT/ISA/210 (patent family annex) (January 2015)